# EUROPEAN PATENT APPLICATION

(11) **EP 3 282 273 A1**
(43) Date of publication of application: **14.02.2018**
(21) Application number: 16183277.9
(22) Date of filing: 08.08.2016
(51) Int. Cl.: G01S 3/783

(54) **SENSOR DEVICE FOR MEASURING A DIRECTION ALONG WHICH LIGHT OF A LIGHT SOURCE, PARTICULARLY OF THE SUN, IMPINGES ONTO THE SENSOR DEVICE AS WELL AS FOR MEASURING THE INTENSITY OF THE LIGHT FROM SAID DIRECTION**

(71) Applicant: Sensirion AG, 8712 Stäfa (CH)
(72) Inventor: WINKLER, Lukas, 8712 Staefa ZH (CH); BECKER, Manuel, 8712 Staefa ZH (CH); WIGET, Markus, 8712 Staefa ZH (CH)
(74) Representative: Schulz, Ben Jesko

(57) **Abstract**

The invention relates to a sensor device (1) for measuring a direction of a light source, particularly of the sun, comprising: at least a first and a second photosensitive element (P1, P2), wherein each photosensitive element (P1, P2) comprises a photosensitive surface (S1, S2) for detecting light (L) impinging on the respective photosensitive surface (S1, S2), and a substrate (20) for carrying said at least two photosensitive elements (P1, P2), wherein the substrate (20) comprises a front side (20a) and a back side (20b), which back side (20b) faces away from the front side (20a). According to the invention, said substrate (20) is designed to shade the photosensitive elements (P1, P2) depending on said direction to be estimated.

## Description

The present invention relates to a sensor device for measuring a direction along which light of a light source, particularly of the sun (e.g. an azimuth angle), impinges onto the sensor device, and particularly also for measuring the intensity of the light from the corresponding direction.

Such a sensor device is known from JP 59-015809 A which describes a sensor device using three photo diodes.

Further, also in DE 10 2005 006 472 A1 three photo diodes are used wherein one of them faces upwards while the two other diodes face sidewards, respectively, but in opposite directions.

Furthermore, DE 10 2004 053 958 B3 discloses a sensor device for detecting a position of the sun using three photo diodes which are arranged on a bent circuit board.

Based on the above, the problem to be solved by the present invention is to provide an improved sensor device of the afore-mentioned kind.

This problem is solved by a sensor device having the features of claim 1.

Preferred embodiments of the respective aspect of the present invention are stated in the corresponding sub claims and are further described below.

According to claim 1, a sensor device for measuring a direction (e.g. such as an azimuth and/or an elevation angle of the light source) along which light of a light source, particularly of the sun, impinges onto the sensor device, and particularly also for measuring the intensity of the light coming from said direction, is disclosed, comprising:
- at least a first and a second photosensitive element, wherein each photosensitive element comprises a photosensitive surface for detecting sun light impinging on the respective photosensitive surface
- a substrate for carrying said at least two photosensitive elements, and
- wherein said substrate is designed to shade the photosensitive surfaces of the photosensitive elements depending on said direction (e.g. relative position of the light source).

Such a sensor device is also denoted as sun load sensor.

In the framework of the present invention, the notion direction does not necessarily mean a complete set of coordinates describing a vector, but may also relate to a single component of such a direction (e.g. an angle such as an azimuth angle or an elevation angle of the sun), or to the more general classifications "left" or "right", i.e. light is coming either from the left side of the sensor device or from the right side of the sensor device (which may also be expressed in terms of two angle intervals, e.g. [90°,0°[ and ]0°,90°]).

Particularly, said light to be detected can be in the visible and/or in the infrared (IR) range. Correspondingly, in all embodiments, the respective photosensitive element is preferably configured to detect light in the visible and/or in the infrared (IR) range.

Further, according to an embodiment, the substrate is a planar substrate comprising a front side and a back side, which back side faces away from the front side, wherein particularly said photosensitive surfaces are planar and extend parallel to the front side, and wherein particularly each photosensitive surface points in the same direction (i.e. each of said photosensitive surface comprises a normal, which normals are parallel to one another and point in the same direction). Further, particularly, the photosensitive surfaces lie in the same plane, which plane is spaced apart from the front side of the substrate in a direction running perpendicular to the plane of the photosensitive surfaces and the front side of the substrate.

Further, particularly, according to an embodiment of the present invention, the normal of the respective photosensitive surface points in the same direction as a normal of the front side of the substrate.

Further, according to an embodiment, the back side of the substrate comprises a first edge and an opposing second edge, wherein the first photosensitive element is arranged at or on the first edge, and wherein the second photosensitive element is arranged at or on the second edge.

Particularly, according to an embodiment of the present invention, said substrate can be a printed circuit board (PCB), particularly a substrate / PCB comprising SMD technology regarding its electrical components, wherein SMD stands for surface-mount device.

Further, according to an embodiment of the present invention, each photosensitive element is configured to generate an output signal indicative of the intensity of the sun light impinging on the respective photosensitive surface (e.g. the respective output signal can be used to determine the intensity of the light impinging on the respective photosensitive surface). Particularly, according to an embodiment of the present invention, the photosensitive surfaces of the photosensitive elements are flat surfaces (e.g. rectangular surfaces).

Further, according to an embodiment of the present invention, the respective photosensitive surface may be formed by a semiconductor material.

Particularly, according to an embodiment of the present invention, one, several or all of the photosensitive elements can be formed as a photodiode, respectively. Particularly, the individual photodiode can be an SMD. Particularly, normal photodiodes and SMDs can be used together. Such an SMD is characterized by electrical contact members that are configured to be soldered to a surface of the substrate, which surface faces the photosensitive element, wherein these contact members do not protrude past said surface / through the substrate through through-holes of the substrate. Thus, SMDs are different from electronic components that comprise contact members which protrude through through-holes of the substrate and are soldered to a surface of the substrate which faces away from the respective component.

Furthermore, according to a preferred embodiment of the present invention, the substrate comprises a recess. In certain embodiments the recess may be formed as a through-hole that connects said front side with said back side of the substrate. Alternatively, the recess may be formed as an indentation of the front side which does not connect the front side with the back side. Particularly, said indentation may comprise a portion that forms a through-hole in the substrate.

Particularly, according to an embodiment of the present invention, the substrate forms a frame member surrounding said recess, wherein said frame member comprises a first leg, and a second leg, which legs are connected to each other to form said frame member. Particularly, said legs may be integrally connected to each other to form said frame member.

Further, according to an embodiment of the present invention, said first edge and said second edge form edges of said recess and face each other (e.g. in the first direction), wherein the first edge is particularly formed by the first leg, and wherein the second edge is particularly formed by the second leg.

Particularly, according to a further embodiment, the frame member may comprise a third leg connecting the first leg to the second leg so that a U-shaped frame member is formed.

Particularly, the frame member may comprises four legs, i.e., also third and a fourth leg besides said first and second leg, wherein the third and the fourth leg connect the first leg to the second leg so that a circumferential (e.g. rectangular frame member is formed). Furthermore, a third photosensitive element may be arranged on the third leg and a fourth photosensitive element may be arranged on the fourth leg (e.g. in the same manner as the first/second photosensitive elements are arranged on the first/second leg).

Generally, four photosensitive elements may be used in embodiments of the present invention. This particularly allows one to determine two independent angles (e.g. the azimuth angle and the elevation angle of the sun or another light source) at the same time.

Furthermore, the frame member may comprise a bridge extending between the first and the second leg, wherein a third photosensitive element may be arranged on said bridge or may form part of said bridge. Particularly, the first photosensitive element may be arranged on the first leg offset with respect to the second photosensitive element on the second leg. Particularly, the first and the second photosensitive element may be arranged on different sides of said bridge. Due to the bridge the substrate actually comprises two recesses on either side of the bridge.

Particularly, according to an embodiment, while the photosensitive surfaces extend in a common plane (which common plane is spaced apart from the front side of the substrate and runs parallel to the front side), the two photosensitive elements protrude towards one another (from the respective edge) and face each other in a first direction (that extends in said common plane). Particularly, the first and the second edge (or the first and the second leg) extend perpendicular to the first direction, while the third and fourth leg may extend in the first direction for connecting the first leg to the second leg.

Particularly, according to an embodiment of the present invention, the first photosensitive element is arranged on the first leg on the back side of the substrate such that it is arranged on said first edge and protrudes past the first edge towards the second photosensitive element. Furthermore, according to an embodiment, the second photosensitive element is arranged on the second leg on the back side of the substrate such that it is arranged on said second edge and protrudes past the second edge towards the first photosensitive element.

Particularly, in an embodiment, when the sensor device is arranged in an operating position (e.g. on a window pane of a car or of a building), the first leg is configured to shade the photosensitive surface of the first photosensitive element depending on said direction (e.g. depending on an azimuth and/or elevation angle of the light source/sun). Likewise, in an embodiment, the second leg is configured to shade the photosensitive surface of the second photosensitive element depending on said direction.

Particularly, for shading the photosensitive surface of the first photosensitive element in a defined manner, the front side of the substrate in the region of the first leg (particularly the whole front side) is elevated with respect to the photosensitive surface of the first photosensitive element. Likewise, according to an embodiment, for shading the photosensitive surface of the second photosensitive element in a defined manner, the front side of the substrate in the region of the second leg (particularly the whole front side) is elevated with respect to the photosensitive surface of the second photosensitive element.

Furthermore, according to a preferred embodiment of the present invention, the sensor device comprises two flat protrusions that protrude from the first leg towards the recess such that the respective protrusion forms a step with the first leg, wherein the photosensitive surface of the first photosensitive element (or at least a section thereof) extends between said two protrusions, particularly in a second direction that runs perpendicular to said first direction, wherein particularly the first and the second edge / leg extend along said second direction, respectively.

Further, according to a preferred embodiment of the present invention the sensor device comprises two more flat protrusions that protrude from the second leg towards the recess such that the respective protrusion forms a step with the second leg, wherein the photosensitive surface of the second photo sensitive element (or at least a section thereof) now extends between said two protrusions, particularly in said second direction.

Particularly, like the first and the second photosensitive element, the protrusions of the first leg protrude towards the protrusions of the second leg in the first direction, and the protrusions of the second leg protrude towards the protrusions of the first leg in the opposite direction.

Particularly, according to an embodiment, each protrusion comprises a front surface that extends parallel to the photosensitive surface of the associated photosensitive element and comprises a normal that points in the same direction as the normal of the photosensitive surface of the respective photosensitive element.

Particularly, according to an embodiment, each protrusion may form a small overlap with the adjacent photosensitive element

Particularly, according to an embodiment, a thickness of the protrusions perpendicular to their respective front surface is smaller than the thickness of the adjacent first or second leg of the substrate perpendicular to the front and back side of the substrate (frame member). Particularly, said thickness of the protrusions is as small as possible so that the front surfaces of the protrusions are elevated with respect to the photosensitive surfaces of the photosensitive elements as little as possible.

Further, according to an embodiment, the respective protrusion can be formed integral with the respective leg from which the respective protrusion protrudes.

Further, according to an embodiment, each protrusion may comprise a flat rectangular shape extending longitudinally in said second direction.

Furthermore, according to a preferred embodiment, the sensor device comprises a third photosensitive element comprising a photosensitive surface for detecting light (particularly in the visible and/or infrared region, particularly sun light) impinging on the photosensitive surface. This third photosensitive element may be formed as the first or second photosensitive element.

Particularly, according to an embodiment, the third photosensitive element is arranged in front of the recess and extends in the first direction between a protrusion protruding (in the first direction) from the third leg towards the third photosensitive element and an end region of a protrusion that protrudes from the second leg adjacent the second photosensitive element and faces said protrusion of the third leg. Here, particularly, the protrusion of the third leg forms a step with the third leg. Furthermore, according to an embodiment of the present invention, the third photosensitive diode and said protrusion of the third leg as well as said end region of said protrusion of said second leg divide the recess into two separate regions. Here, particularly, the third photosensitive element comprises a first sidewall that is spaced apart from the third leg (in the second direction) as well as a second sidewall that faces away from the first sidewall and is spaced apart from the fourth leg (in the second direction).

Particularly, this arrangement of the third photosensitive device can be achieved by means of an essentially L-shaped recess, wherein the third photosensitive element is particularly positioned such that the two regions of the recess essentially comprise a rectangular shape, respectively.

Furthermore, according to yet another preferred embodiment of the present invention, which particularly does not comprise a continuous recess (e.g. through-hole) in the substrate, but may simply feature a flat rectangular substrate, the first edge of the substrate is formed by a first sidewall of the substrate and said back side, and wherein the second edge of the substrate is formed by a second sidewall of the substrate and said back side (here said sidewalls extend perpendicular to the front and back side of the substrate), wherein said sidewalls face away from each other, and wherein the first photosensitive element is arranged on the back side of the substrate such that it is arranged on said first edge and protrudes past the first edge (and particularly past the first sidewall) away from the second photosensitive element. Particularly, the substrate may comprise a cut-out for each photosensitive element at its respective first/second edge in front of which the respective photosensitive element may be arranged.

Further, in an embodiment, the second photosensitive element is arranged on the back side of the substrate such that it is arranged on said second edge and protrudes past the second edge (and particularly past the second sidewall) away from the first photosensitive element.

Particularly, regarding the embodiments in which the substrate does not comprise said recess, the substrate is configured to shade the photosensitive surface of the first photosensitive element and/or of the second photosensitive element depending on an azimuth angle of the sun, respectively, when the sensor device is arranged in an operating position.

Particularly, for shading the photosensitive surface of the first and/or second photosensitive element in a defined manner, the front side of the substrate is elevated with respect to the photosensitive surface of the first and/or second photosensitive element.

Furthermore, in all embodiments, the photosensitive elements (i.e. said two or said three photosensitive elements) are particularly configured to generate output signals which are indicative of the intensity of the sun light impinging on the respective photosensitive surface.

Particularly, according to an embodiment, the sensor device comprises an (e.g. integrated) analyzing circuit that is configured to estimate said direction (e.g. azimuth and/or elevation angle of a light source, e.g. sun) using said output signals. Particularly, the analyzing circuit is also configured to determine the intensity of the light coming from the direction to be detected using said output signals.

Furthermore, according to an embodiment of the present invention, the analyzing circuit is configured to generate a modified output signal from the respective output signal, which respective modified output signal corresponds to a desired output signal.

According to yet another embodiment of the present invention, the sensor device also comprises one or several temperature and/or humidity sensors arranged on the substrate (particularly on the front side of the substrate) for detecting fogging on a surface to which the sensor device is connected. This surface can be a surface of window pane (e.g. of a car or of a housing). Particularly such a sensor may be a sensor that is configured to detect the temperature and the humidity, i.e., both quantities.

Furthermore, according to a preferred embodiment of the present invention, which may be combined with all other embodiments described herein, the substrate comprises a circumferential sidewall which extends in the thickness direction of the substrate (i.e. perpendicular to the front and or back side of the substrate) and connects the front side with the back side of the substrate, wherein said sidewall comprises a surface that protects said circumferential sidewall from light infiltration (stray light). Particularly, said sidewall may be coated with an absorbing or a reflective material such as a metal layer (e.g. metallization), wherein particularly the respective material is absorbing or reflective with respect to the relevant wavelengths in the visible and/or IR range of the light source.

Furthermore, according to a preferred embodiment of the present invention, which may be combined with all other embodiments described herein, the front side comprises in the region of the first leg a surface that improves said shading. Particularly, said surface of the front side of the first leg may be coated with an absorbing or a reflective material such as a metal layer (e.g. metallization), wherein particularly the respective material is absorbing or reflective with respect to the relevant wavelengths in the visible and/or IR range of the light source.

Likewise, according to an embodiment, the front side comprises in the region of the second leg a surface that protects said front side of the second leg from light infiltration. Particularly, said surface of the front side of the second leg may be coated with ab absorbing or a reflective material such as a metal layer (e.g. metallization), wherein particularly the respective material is absorbing or reflective with respect to the relevant wavelengths in the visible and/or IR range of the light source.

Due to said surface finishes of the circumferential sidewall or of said first and second leg (front side), a reduction of stray light and an improved shading of the photosensitive surfaces of the photosensitive elements can be achieved.

Furthermore, according to a preferred embodiment of the present invention, said photosensitive surfaces (e.g. of the first and the second photosensitive element, or of all three photosensitive elements) are arranged in the same plane (see also above).

Further features, advantages and embodiments of the present invention will be described below with reference to the Figures, wherein
- Fig. 1A: shows a schematical cross sectional view (left side) and a plan view (right side) of an embodiment of a sensor device according to the invention having two photosensitive elements (e.g. photodiodes) arranged on a substrate in form of a circumferential frame member;
- Fig. 1B: shows a modification of the embodiment of Fig. 1A, wherein the substrate is formed as a U-shaped frame member;
- Fig. 1C: shows a modification of the embodiment of Fig. 1A, wherein here the frame member comprises a central bridge carrying a third photosensitive element;
- Fig. 1D: shows a modification of the embodiment shown in Fig. 1A, wherein here the recess is not a through-hole but an indentation formed in the front side of the substrate;
- Fig. 1E: shows a modification of the embodiment shown in Fig. 1A / Fig. 1D, wherein here the indentation comprises a through-hole region so that the recess comprises a stepped structure;
- Fig. 2: shows a schematical cross sectional view (left side) and a plan view (right side) of a modification of the embodiment shown in Fig. 1 having four photosensitive elements (e.g. photodiodes);
- Fig. 3A: shows a schematical cross sectional view (left side) and a plan view (right side) of a further embodiment of a sensor device according to the invention having two photosensitive elements (e.g. photodiodes);
- Fig. 3B: shows a schematical cross sectional view of a modification of the embodiment shown in Fig. 3A, wherein here the substrate comprises cut outs at the edges where the photosensitive elements are arranged;
- Figs. 4A-4C: show different views of an embodiment of a sensor device according to the present invention having three photosensitive elements (e.g. photodiodes);
- Figs. 5A-5C: show different views of an embodiment of a sensor device according to the present invention of the kind shown in Fig. 1A having merely two photosensitive elements (e.g. photodiodes);
- Fig. 6: shows a schematical illustration of the elevation angle of the sun;
- Fig. 7: shows a schematical illustration of the azimuth angle of the sun;
- Figs. 8 to 10: show different views of a sensor device according to the invention of the kind shown in Figs. 4A to 4C for illustrating the shading of the photosensitive elements due to the azimuth angle of the incident sun light (Fig. 10), as well as the reduction of shading with respect to the elevation angle of the incident sun light (Fig. 9);
- Figs. 11 to 12: show output signals of the first and second photosensitive element for a relatively small substrate thickness (Fig. 11) and a larger substrate thickness (Fig. 12);

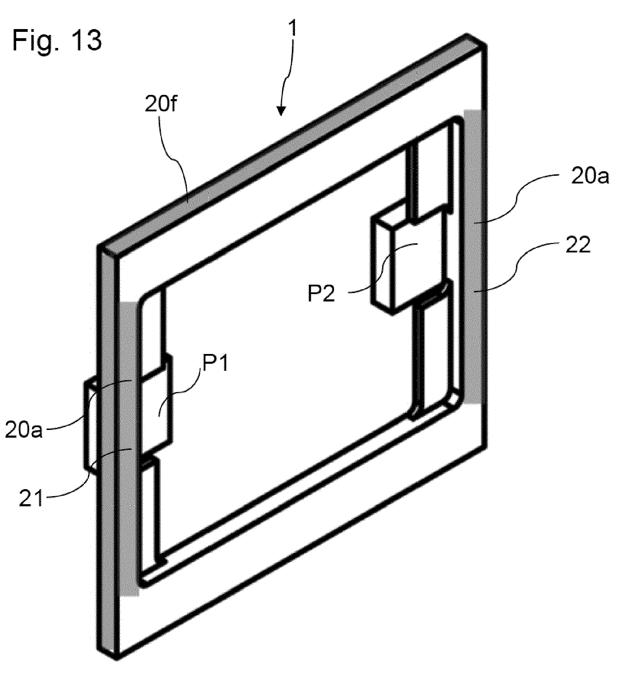

- Fig. 13: shows the coating of surfaces of the circumferential sidewall of the substrate and of the front side in the region of the first and second leg for improving shading of the photosensitive elements by means of the first and second leg of the substrate, further the sidewall coating serves for minimizing stray light;
- Fig. 14: shows a signal flow of a sensor device according to the present invention;
- Fig. 15: shows a plan view onto the back side of a substrate of a sensor device according to the invention, which sensor device comprises a temperature and/or humidity sensor for antifogging purposes/applications.
- Fig. 16: shows the use of a sensor device according to the present invention in a motor vehicle, wherein the sensor device is arranged on the front window pane of the motor vehicle;
- Fig. 17: shows the use of a sensor device according to the present invention in a house using a vertical arrangement of the substrate (e.g. on a window pane of the house); and
- Fig. 18: shows the use of a sensor device according to the present invention in a further house using a horizontal arrangement of the substrate (e.g. on a roof of the house).

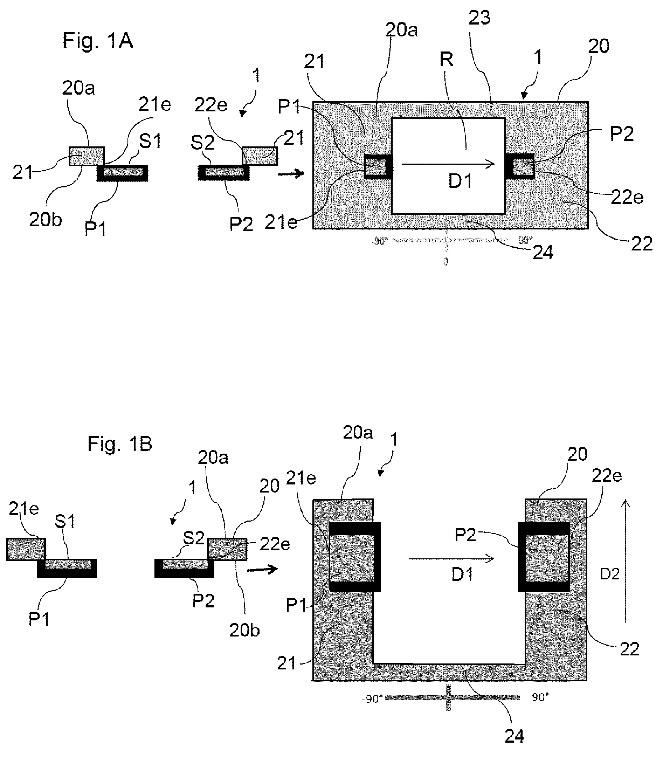

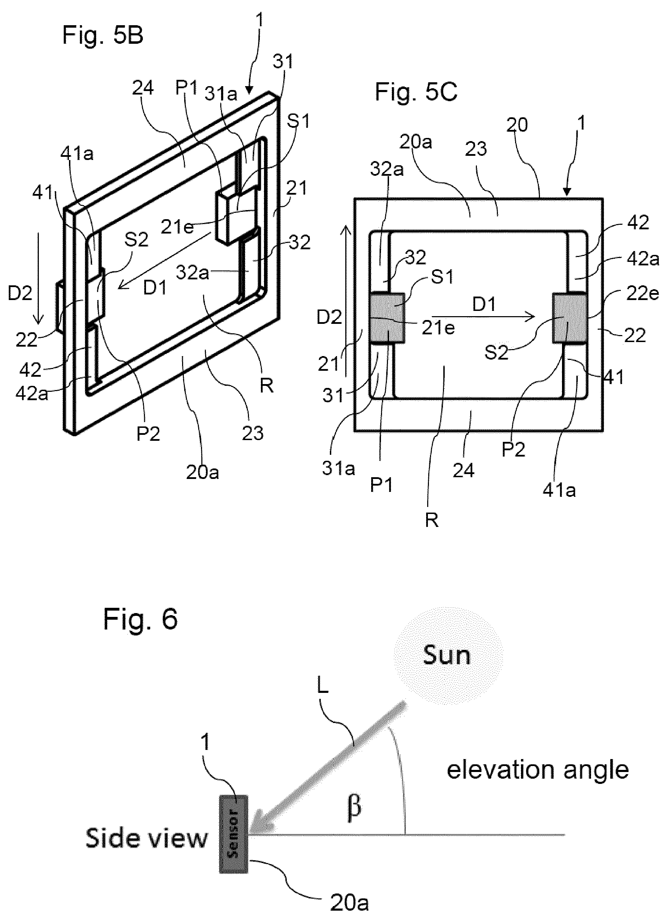

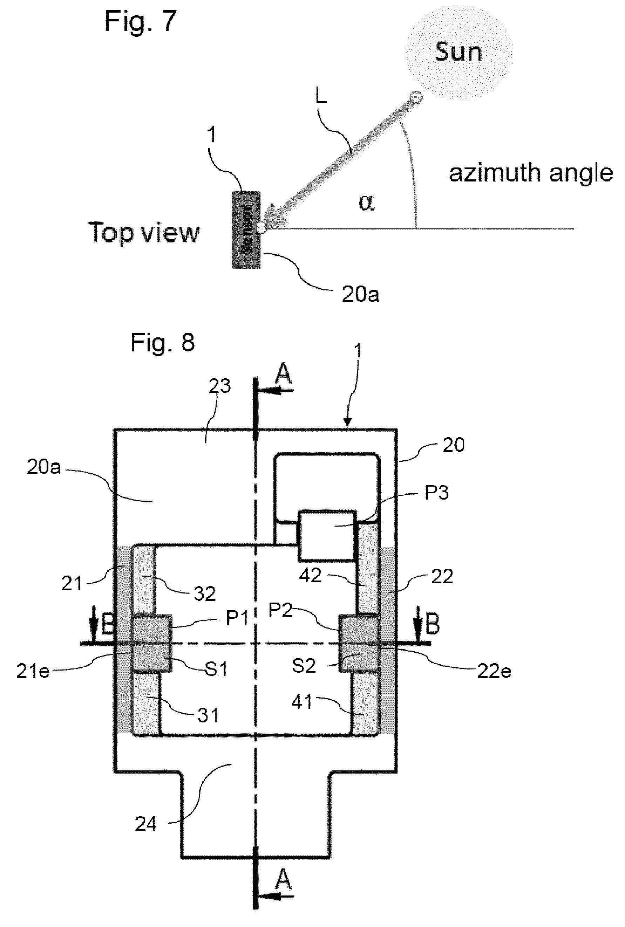

As schematically shown in Fig. 1A, the present invention relates to a sensor device 1 for measuring a direction along which light of a light source such as the sun hits the sensor device 1, e.g. an azimuth angle α and/or an elevation angle β of a light source, particularly of the sun (cf. Figs. 6 and 7 for a definition of the elevation and azimuth angles of said light source / sun), wherein the sensor device 1 comprises at least a first and a second photosensitive element P1, P2, wherein each photosensitive element P1, P2 comprises a photosensitive surface S1, S2 for detecting (e.g. sun) light L impinging on the respective photosensitive surface S1, S2, and a planar substrate 20 comprising parallel front and back sides 20a, 20b, wherein the substrate serves for carrying said at least two photosensitive elements P1, P2. The substrate 20 forms a circumferential frame member 20 comprising a first leg 21, a second leg 22, a third leg 23, and a fourth leg 24, wherein the first and the second leg 21, 22 extend in a second direction D2 and are connected by a third and a fourth leg 23, 24 extending in a first direction D1 (perpendicular to the second direction) such that a circumferential frame member 20 is formed.

Particularly, the back side 20b comprises a first edge 21e formed on the first leg 21 and an opposing second edge 22e formed on the second leg 22, wherein the first photosensitive element P1 is arranged on the back side 20b on the first edge 21 e, and wherein the second photosensitive element P2 is arranged on the back side 20b on the second edge 22e, and wherein said two photosensitive surfaces S1, S2 extend parallel to the front side 20a of said substrate 20 and point in the same direction as the front side 20a.

Further, particularly, the substrate 20 comprises a recess R in the form of a through-hole framed by the legs 21, 22, 23, 24, and the first and second photodiode P1, P2 face each other across the recess R in said first direction D1.

The frame member 20 is configured to shade the photosensitive surfaces S1, S2 depending on the direction of the light (particularly depending on the azimuth and elevation angle of the light source).

In all embodiments described herein, the respective photosensitive element P1, P2 (and particularly P3 and/or P4) can be formed by a photodiode, particularly in form of an SMD.

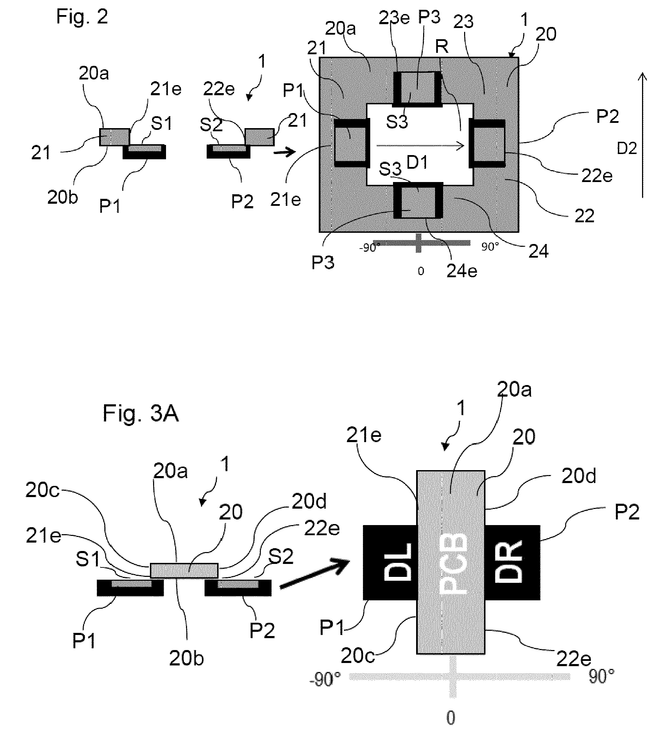

Fig. 2 shows a variant of the embodiment shown in Fig. 1A that comprises four photosensitive elements P1, P2, P3, P4, wherein (as in Fig. 1A) the substrate 20 is again formed as a frame member 20 comprising a first leg 21 facing a second leg 22 in a first direction D1, wherein these two legs 21, 22 extend in a perpendicular second direction D2 and are connected by a third and a fourth leg 23, 24 extending in the first direction D1 such that in turn a circumferential frame member 20 is formed. Each leg 21, 22, 23, 24 comprises an edge 21 e, 22e, 23e, 24e on the back side 20b of the substrate that delimits the recess R of the substrate 20, wherein now (in contrast to Fig 1A) a photosensitive element P1, P2, P3, P4 is arranged on each of these edges 21 e, 22e, 23e, 24e. Thus, the first and the second photosensitive element P1, P2 face each other in the first direction D1, while the third and the fourth photosensitive element P3, P4 face each other in the second direction D2. As before, the directions D1, D2 span the plane along which the front and backside 20a, 20b of the substrate 20 extend. Further, the photosensitive surfaces S1, S2, S3, S4 extend parallel to the front side 20 and particularly all lie in a common plane. Particularly, said photosensitive surfaces S1, S2, S3, S4 all point in the same direction, namely in the direction of the front side 20a of the substrate 20. The frame member 20 is configured to shade the photosensitive surfaces S1, S2, S3, S4, depending on the direction of the light (particularly depending on the azimuth and elevation angle of the light source).

Further, Fig. 1B shows a modification of the embodiment shown in Fig. 1A, wherein now the third leg 23 is omitted, such that the frame member 20 comprises a U-shape.

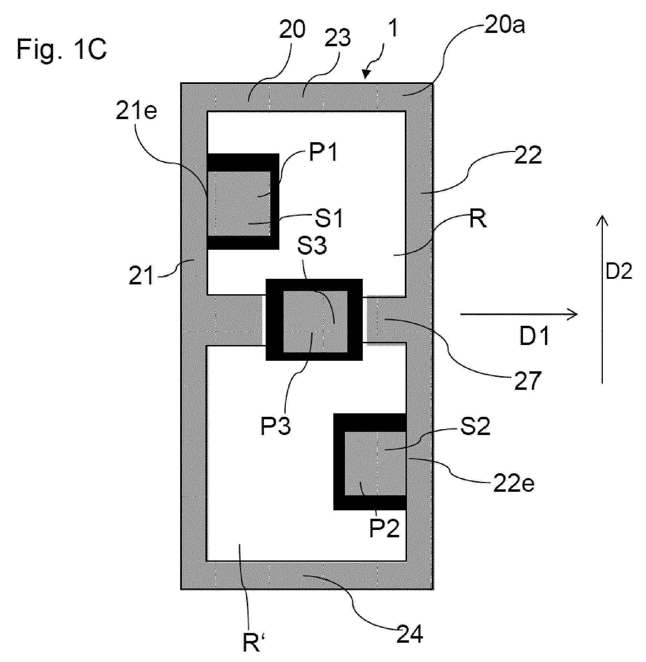

Further, Fig. 1C shows a modification of the embodiment shown in Fig. 1A, wherein now a bridge 27 extends in the first direction D1 between the first leg 21 and the second leg 22, which bridge 27 comprises or carries a third photosensitive element P3 (see also below concerning the function of the third photosensitive element P3). Further, the first and the second photosensitive element are arranged offset with respect to said second direction D2 along which said first and second leg extend 21, 22. Here, the recess R is separated by the bridge 27 into two recesses R, R' on either side of the bridge 27, wherein the first photosensitive element P1 protrudes over the first recess R, while the second one P2 protrudes over the second recess R'.

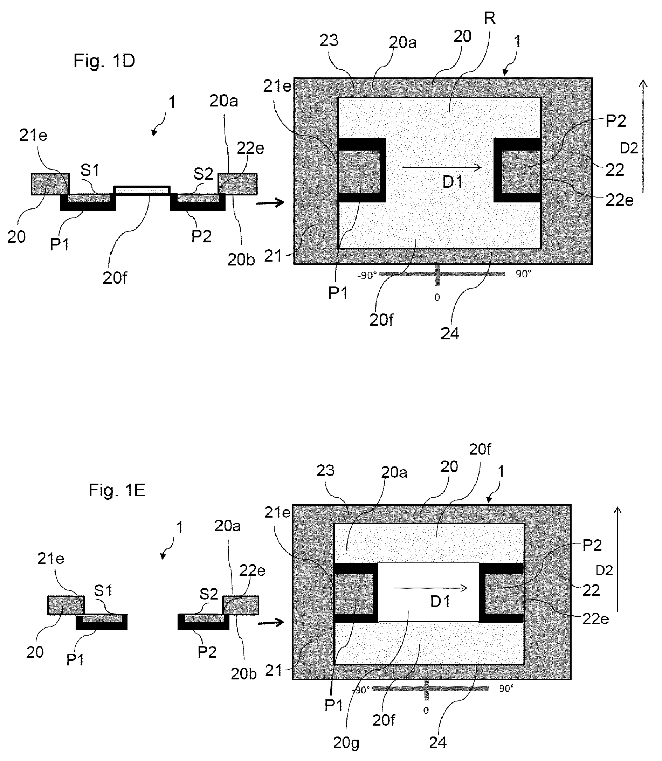

Further, Fig. 1D shows a modification of the embodiment of Fig. 1A, wherein here the recess R is not a through-hole but an indentation R formed in the front side of the substrate 20, wherein the indentation comprises a bottom 20f that forms steps with the surrounding legs 21, 22, 23, 24. As can be seen from the left hand side of Fig. 1D, the back side of the bottom 20f is particularly flush with the back sides 20b of the legs 21, 22, 23, 24. Further, the bottom 20f may comprises a recess for each photosensitive element P1, P2, wherein the respective photosensitive element P1, P2 is particularly arranged on the backside 20b in front of the associated recess so as to cover the latter.

Further, according to Fig. 1E, said indentation R may comprise a through-hole section 20g extending between the photosensitive elements P1, P2 in the first direction D1 and between bottom portions 20f of the indention R in the second direction D2, wherein said bottom portions 20f in turn form steps with the adjacent legs 21, 22, 23 and 21, 22, 24.

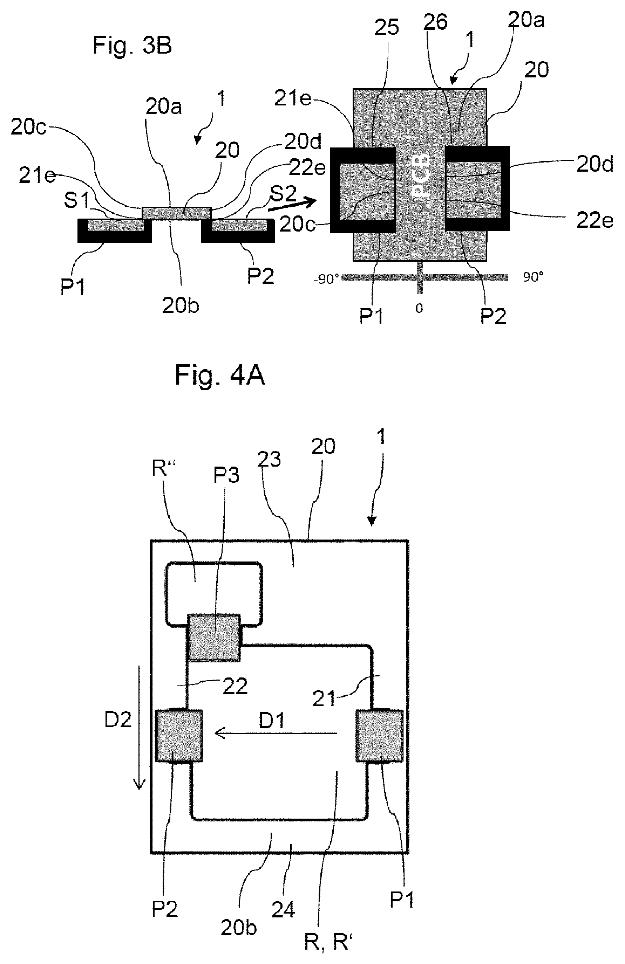

However, in contrast thereto, Fig. 3 shows a schematical representation of a further embodiment of the present invention, wherein now the recess R in the middle of the substrate 20 is omitted. Here, the first edge 21e of the substrate 20 is formed by a first sidewall 20c of the substrate 20 and by said back side 20b of the substrate 20. Further, the second edge 22e of the substrate 20 is formed by a second sidewall 20d of the substrate 20 and by said back side 20b of the substrate 20. Particularly, said two sidewalls 20c, 20d face away from each other. Further, the first photosensitive element P1 is arranged on the back side 20b of the substrate 20 such that it is arranged on said first edge 21 e and protrudes past the first edge 21 e away from the substrate 20 and the second photosensitive element P2. Analogously, the second photosensitive element P2 is arranged on the back side 20b of the substrate 20 such that it is arranged on said second edge 22e and protrudes past the second edge 22e away from the substrate 20 and the first photosensitive element P1. Here, shading of the photosensitive surfaces S1 and S2 of the photosensitive elements P1, P2 is achieved by means of the substrate 20 which comprises a front side 20a that is elevated compared to the photosensitive surfaces S1, S2 so that the substrate 20 can provide proper shading depending on the direction of the light (e.g. the azimuth angle α of the sun) when the substrate 20 is arranged in a suitable operating position as e.g. shown in Fig. 7, e.g. with the front side 20a being arranged vertically and facing south, i.e. α=0°).

Further according to Fig. 3B, in a modification of the embodiment shown in Fig. 3A, the substrate 20 may comprises cut-outs 25, 26 for the photosensitive elements P1, P2 at the edges 21 e, 22e at which the respective element P1, P2 is arranged.

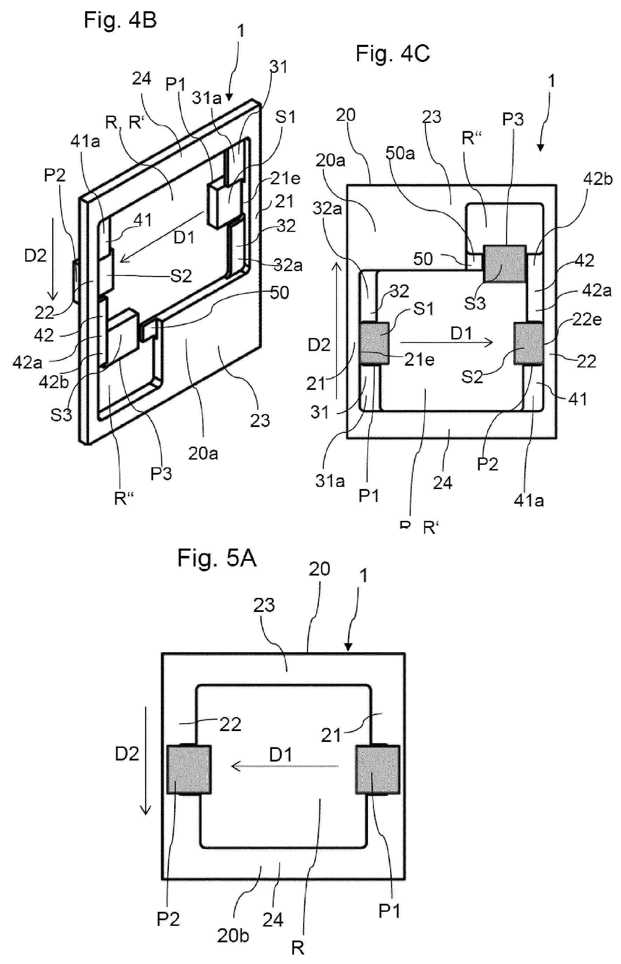

As already described above, the sensor device 1 can comprise three photosensitive elements P1, P2, P3. Such an embodiment is shown in detail in Figs. 4A to 4C. Here, the substrate 20 forms a circumferential frame member surrounding said recess R, wherein said frame member 20 comprises four legs 21, 22, 23, 24, namely a first leg 21, a second leg 22, a third leg 23, and a fourth leg 24, which legs are integrally connected to each other to form said frame member 20. Particularly said first and second edge 21e, 22e face each other in the first direction D1 and form edges of said recess R, wherein the first edge 21e is formed by the first leg 21, and wherein the second edge 22e is formed by the second leg 22. Particularly, the first and second edge 21 e, 22e / leg 21, 22 extend in a second direction D2 running perpendicular to the first direction D1, wherein said directions span an extension plane along which the front and back side 20a, 20b of the substrate extend. Further, said third and said fourth leg 23, 24 extend in the first direction, respectively, and connect the first and the second leg 21, 22 to each other.

Furthermore, the first photosensitive element P1 is arranged on the first leg 21 on the back side 20b of the substrate 20 (cf. Fig. 4A) such that it is arranged on said first edge 21e and protrudes past the first edge 21e towards the second photosensitive element P2 (in the second direction D1). Likewise, the second photosensitive element P2 is arranged on the second leg 22 on the back side 20b of the substrate 20 such that it is arranged on said second edge 22e and protrudes past the second edge 22e towards the first photosensitive element P1 in the opposite direction as can be seen from Figs. 4A to 4C.

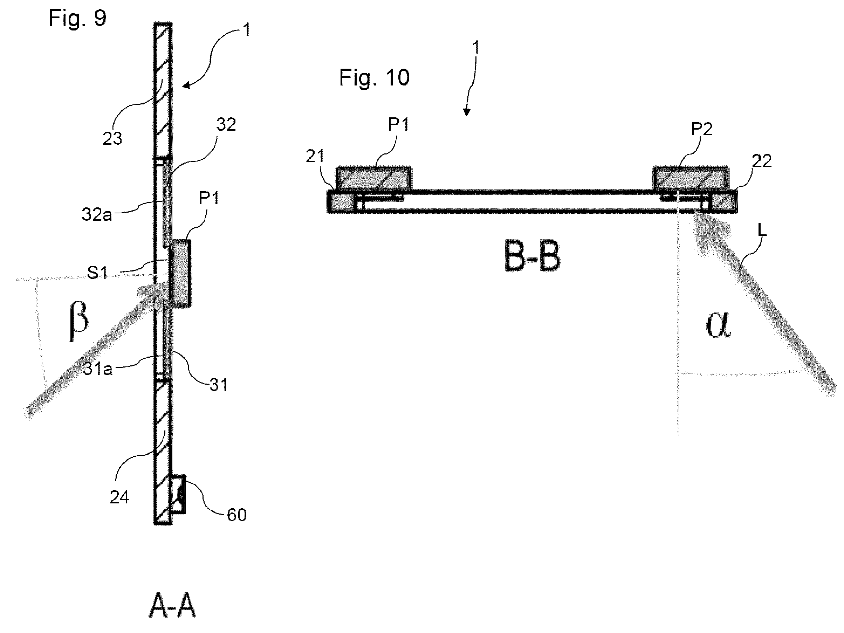

In order to generate output signals 01, 02 of the photosensitive elements P1 and P2 that can be used to determine said azimuth angle α, the first leg 21 is configured to shade the photosensitive surface S1 of the first photosensitive element P1 which is indicated in Figs. 8 to 10, wherein said shading depends on an azimuth angle α of the sun as can be inferred from Fig. 10. In the same fashion, the second leg 22 is configured to shade the photosensitive surface S2 of the second photosensitive element P2 depending on an azimuth angle α of the sun (here shading is achieved when the sun comes from the right side in Fig 10.

Particularly, for shading the photosensitive surfaces S1, S2 of the photosensitive elements P1, P2, the front side 20a of the substrate 20 is elevated (at least in the regions of the legs 21, 22) so that the legs 21, 22 can achieve shading of the surfaces S1, S2 which yields to output signals 01, 02 of the photodiodes P1, P2 that reflect the shaded area of the respective surface S1, S2. The larger the shaded area, of the photosensitive surfaces S1, S2 the smaller the respective output signal 01, 02.

Furthermore, as shown in Figs. 4A to 4C and Figs. 8 to 10, the sensor device 1 comprises two flat protrusions 31, 32 that protrude from the first leg 21 towards the recess R (in the first direction D1) such that the respective protrusion 31, 32 forms a step with the first leg 21 (cf. Fig 4B), wherein the photosensitive surface S1 of the first photo sensitive element P1 extends between said two protrusions 31, 32. In order to reduce shading of the photosensitive surface S1 with regard to the elevation angle β of the sun (cf. also Fig. 6), the thickness of the protrusion perpendicular to the first and second direction D1, D2 is preferably as small as possible as indicated in Fig. 9, so that the elevation of the front surfaces 31 a, 32a with respect to the photosensitive surface S1 of the photosensitive element P1 is as small as possible.

Further, likewise, two more protrusions 41, 42 protrude in the same manner from the second leg 22 (in a direction opposite to D1). Also here, the elevation of the front sides 41 a, 42a with respect to the photosensitive surface S2 of the second photosensitive element P2 shall preferably be as small as possible.

Furthermore, as indicated in Figs. 4A to 4C, the sensor device 1 may comprise a third photosensitive element P3 (e.g. a photodiode) comprising a photosensitive surface S3 for detecting sun light L impinging on the photosensitive surface S3 of the third photosensitive element P3.

Particularly, the protrusions (even if as thin as possible) may create an unwanted shadow on the respective photosensitive surface, particularly for large elevation angles β (e.g. close to 90° or -90° in Fig. 6). Particularly, the third photosensitive element P3 is arranged in a way that there will be no shadow on the photosensitive surface S3 of the third photosensitive element (e.g. third photodiode) P3 in case of large elevation angles β. Hence, the third photosensitive element P3 can be used (e.g. by the analyzing circuit 70) to compensate the unwanted effect of a larger elevation angle β on the first and second photosensitive element P1, P2. Particularly, the third photosensitive element P3 is not essential for the basic function of the sensor device 1 according to the invention, but may be used to improve the performance/characteristic of the basic function (e.g. determining a direction of the incoming light).

Particularly, as indicated in Fig. 4B, the third photosensitive element P3 is arranged in front of the recess R and extends between an end region 42b of protrusion 42 that protrudes from the second leg 22 and a protrusion 50 protruding from the third leg 23 towards the third photosensitive element P3 in the first direction D1. Particularly, as can be seen from Figs. 4A to 4C, the third photosensitive element P3 and said protrusion 50 of the third leg 23 as well as said end region 42b divide the recess R into two separate regions R', R".

However, as shown in Figs. 5A to 5C, the third photosensitive element P3 may also be omitted (as well as the protrusion 50). Here, the recess R comprises essentially a rectangular shape. The remaining components can be configured as described in conjunction with respect to Figs. 4A to 4C.

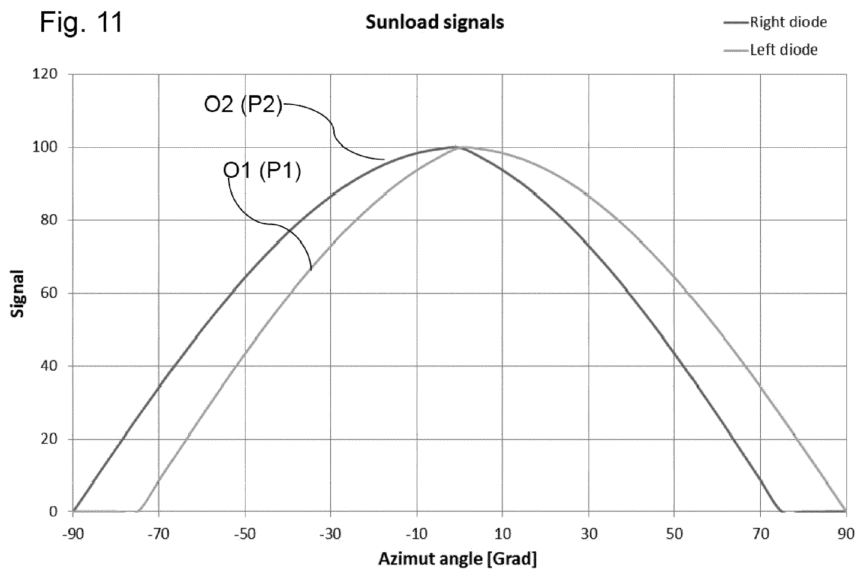

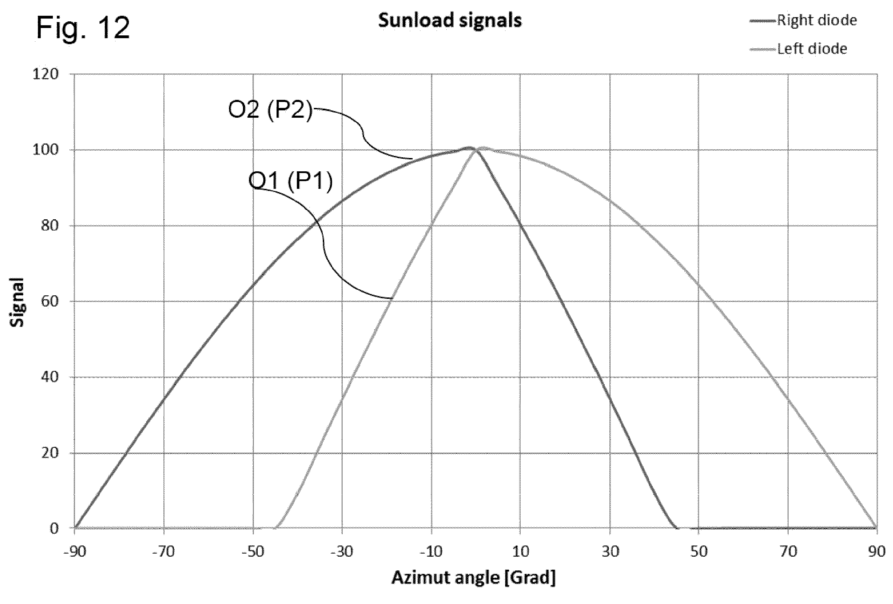

Further, as shown in Fig. 11 and 12, the photosensitive elements P1, P2 (particularly also P3) of the sensor devices 1 described above are configured to generate output signals 01 (generated by the first photosensitive element P1), 02 (generated by the second photosensitive element P2) which are indicative of the intensity of the sun light L impinging on the respective photosensitive surface S1, S2, (S3).

When the sensor device 1 is arranged in a suitable operating position (cf. Figs. 6 and 7 or Figs. 17 to 19), the output signals 01, 02 significantly depend on the azimuth angle α as demonstrated in Figs. 11 and 12 which allows the sensor device 1 to calculate the azimuth angle α by means of an analyzing circuit that can be integrated on the substrate 20 using the output signals 01 and 02. It is to be noted that the output signals 01 and 02 of Fig. 12 correspond to a larger thickness of the legs 21, 22 / substrate 20 (in the direction normal to the front side 20a) compared to the signals of Fig. 11, where a smaller thickness of the legs 21, 22 / substrate 20 was used.

Furthermore, in order to reduce stray light, the substrate 20 can comprises a circumferential sidewall 20f (facing outwards) which extends in the thickness direction of the substrate 20 (i.e. perpendicular to the front and back side 20a, 20b of the substrate 20), wherein said sidewall 20f comprises a surface that protects said circumferential sidewall 20f / substrate 20 from light infiltration/stray light. Preferably, said sidewall 20f is coated with a suitable absorbing coating or a suitable reflective coating such as a metal layer (e.g. metallization).

Furthermore, the front side 20a can comprise in the region of the first leg 21 a surface that protects said front side 20a of the first leg 21 from light infiltration. Particularly, said surface of the front side 20a of the first leg 21 may be coated with a suitable absorbing coating or a suitable reflective coating such as a metal layer (e.g. metallization).

Likewise, for improving shading, the front side 20a can comprise in the region of the second leg 22 a surface that is preferably coated with a suitable absorbing coating or a suitable reflective coating such as a metal layer (e.g. metallization).

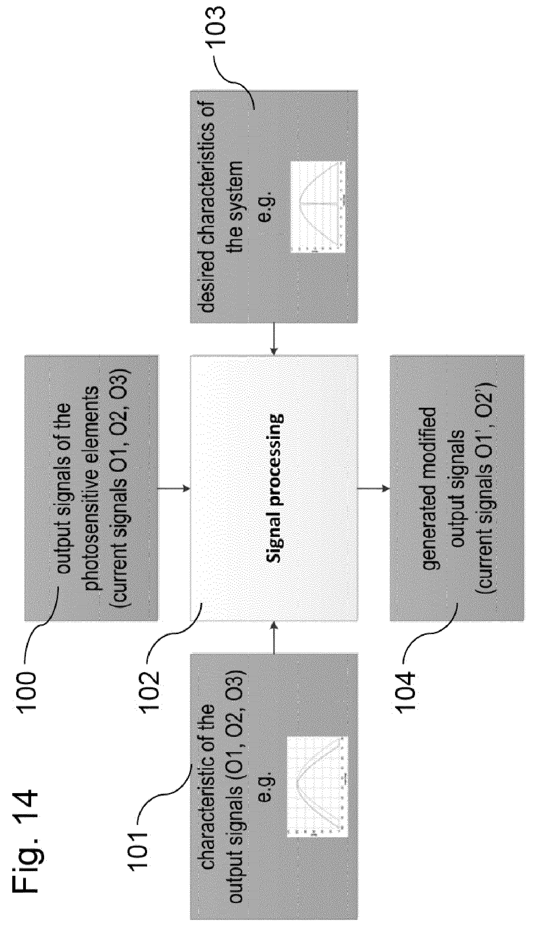

Particularly, as indicated in Figs. 14 the analyzing circuit 70 is particularly configured to generate modified output signals 01', 02', (03') from said output signals 01, 02, (03) which modified output signals correspond to desired output signals, e.g. so as to provide compatibility of the sensor device 1. Particularly, the sensor device 1 comprises a signal processing 102 that is configured to provide said modified output signals O1', O2', (03') from the output signals 01, 02, 03 (100) using characteristics 103 of the modified output signals (i.e. the desired signals) as well as of the output signals 101, so as to transform the latter into modified output signals 01', 02', (03') 104.

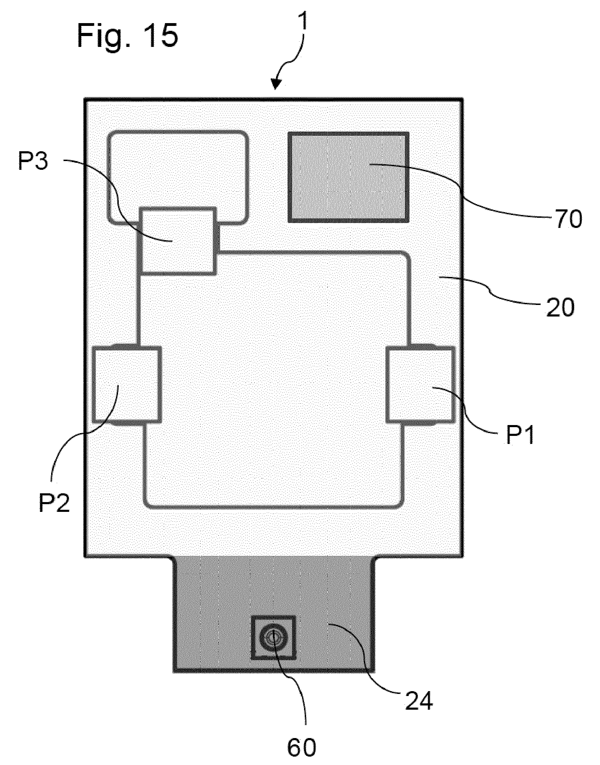

Furthermore, as indicated in Fig. 15, the sensor device 1 can also comprise one or more temperature and/or humidity sensors 60 that is/are arranged on the substrate 20 (e.g. on the fourth leg 24 or on an extension protruding from the fourth leg 24 in the extension plane of the planar substrate 20). Particularly, the at least one temperature and/or humidity sensor 60 may provide an output signal to said analyzing circuit 70 of the sensor device 1 or to a further separate analyzing circuit integrated on the substrate that uses this signal to detect a fogging, e.g. on a surface to which the sensor device 1 / substrate 20 is mounted (such a surface can be formed by a window pane, particularly an inside of a window pane of a motor vehicle). Particularly the sensor 60 may be configured to detect the temperature as well as the (e.g. relative) humidity.

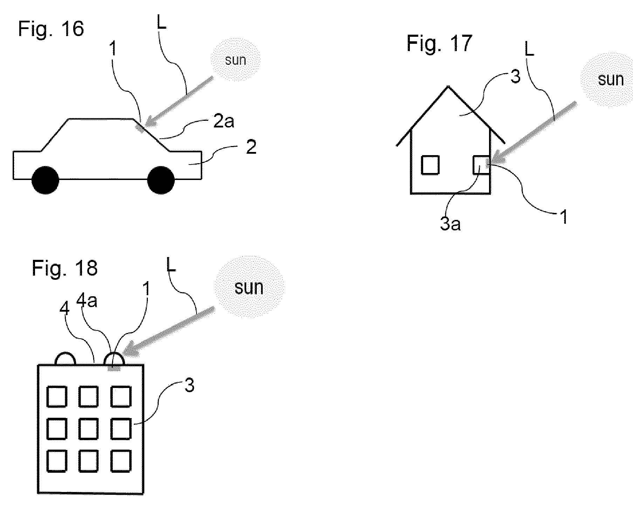

Finally, Figs. 17 to 19 show different applications of the sensor device 1 according to the invention.

As already indicated, Fig. 17 shows the use of a sensor device 1 according to the present invention in a motor vehicle 2, wherein the sensor device 1 is arranged on the front window pane 2a of the motor vehicle 2.

Further Fig. 18 shows the application of a sensor device 1 according to the present invention in a smart house 3 application using a vertical arrangement of the substrate 20, here on a vertical window pane 3a of the building 3.

Finally, Fig. 19 shows the application of a sensor device 1 according to the present invention to another building scenario where the substrate 20 of the sensor device 1 is arranged in horizontal fashion in the region of a roof 4 of the building 3, particularly on or below a roof light 4a.

## Claims

1. A sensor device (1) for measuring a direction (α), along which light of a light source, particularly of the sun, impinges onto the sensor device, comprising:
- at least a first and a second photosensitive element (P1, P2), wherein each photosensitive element (P1, P2) comprises a photosensitive surface (S1, S2) for detecting light (L) impinging on the respective photosensitive surface (S1, S2), and
- a substrate (20) for carrying said at least two photosensitive elements (P1, P2),,
**characterized in that**
the substrate (20) is configured to shade said photosensitive surfaces (S1, S2) depending on said direction.

2. The sensor device according to claim 1, **characterized in that** the substrate (20) is a planar substrate comprising a front side (20a) and a back side (20b), which back side (20b) faces away from the front side (20a), wherein particularly said photosensitive surfaces (S1, S2) extend parallel to the front side (20), and wherein particularly each photosensitive surface (S1, S2) points in the same direction as the front side (20a).

3. The sensor device according to claim 2, **characterized in that** the back side (20b) comprises a first edge (21 e) and an opposing second edge (22e), wherein the first photosensitive element (P1) is arranged on the first edge (21 e) and wherein the second photosensitive element (P2) is arranged on the second edge (22e).

4. The sensor device according to one of the preceding claims, **characterized in that** the substrate (20) comprises a recess (R), wherein particularly the recess is one of: a through-hole or an indentation.

5. The sensor device according to claim 4, **characterized in that** the substrate (20) forms a frame member surrounding said recess (R), wherein said frame member (20) comprises a first leg (21), and an opposing second leg (22), wherein said first and second edge (21e, 22e) form edges of said recess (R) and face each other, wherein the first edge (21 e) is formed by the first leg (21), and wherein the second edge (22e) is formed by the second leg (22).

6. The sensor device according to claim 5, **characterized in that** the first photosensitive element (P1) is arranged on the first leg (21) on the back side (20b) of the substrate (20) such that it is arranged on said first edge (21 e) and protrudes past the first edge (21 e) towards the second photosensitive element (P2), and/or wherein the second photosensitive element (P2) is arranged on the second leg (22) on the back side (20b) of the substrate (20) such that it is arranged on said second edge (22e) and protrudes past the second edge (22e) towards the first photosensitive element (P1).

7. The sensor device according to one of the claims 5 to 6, **characterized in that** the first leg (21) is configured to shade the photosensitive surface (S1) of the first photosensitive element (P1) depending on said direction, particularly depending on an azimuth angle (α) of the light source, and/or wherein the second leg (22) is configured to shade the photosensitive surface (S2) of the second photosensitive element (P2) depending on said direction, particularly depending on said azimuth angle (α) of the light source.

8. The sensor according to one of the claims 5 to 7, **characterized in that** for shading the photosensitive surface (S1) of the first photosensitive element (P1), the front side (20a) of the substrate (20) in the region of the first leg (21) is elevated with respect to the photosensitive surface (S1) of the first photosensitive element (P2) and/or wherein for shading the photosensitive surface (S2) of the second photosensitive element (P2), the front side (20a) of the substrate (20) in the region of the second leg (22) is elevated with respect to the photosensitive surface (S2) of the second photosensitive element (P2).

9. The Sensor device according to one of the claims 5 to 8, **characterized in that** the sensor device (1) comprises two flat protrusions (31, 32) that protrude from the first leg (21) towards the recess (R) such that the respective protrusion (31, 32) forms a step with the first leg (21), wherein the photosensitive surface (S1) of the first photo sensitive element (P1) extends between said two protrusions (31, 32), and/or wherein the sensor device (1) comprises two flat protrusions (41, 42) that protrude from the second leg (22) towards the recess (R) such that the respective protrusion (41, 42) forms a step with the second leg (22), wherein the photosensitive surface (S2) of the second photo sensitive element (P2) extends between said two protrusions (41, 42).

10. The sensor device according to one of the preceding claims, **characterized in that** the sensor device (1) comprises a third photosensitive element (P3) comprising a photosensitive surface (S3) for detecting light impinging on the photosensitive surface (S3) of the third photosensitive element (P3).

11. The sensor device according to claim 10, **characterized in that** the third photosensitive element (P3) is arranged in front of the recess (R) and extends between an end region (42b) of a protrusion (42) that protrudes from the second leg (22) and a protrusion (50) protruding from the third leg (23) towards the third photosensitive element (P3).

12. The sensor device according to claim 11, **characterized in that** the third photosensitive diode (P3) and said protrusion (50) of the third leg (23) as well as said end region (42b) separate the recess (R) into two separate regions (R', R").

13. The sensor device according to claim 2, **characterized in that** the first edge (21 e) of the substrate (20) is formed by a first sidewall (20c) of the substrate and by said back side (20b) of the substrate (20), and wherein the second edge (22e) of the substrate (20) is formed by a second sidewall (20d) of the substrate and by said back side (20b) of the substrate (20), wherein said sidewalls (20c, 20d) face away from each other, and wherein the first photosensitive element (P1) is arranged on the back side (20b) of the substrate (20) such that it is arranged on said first edge (21 e) and protrudes past the first edge (21 e) away from the substrate (20) and the second photosensitive element (P2), and/or wherein the second photosensitive element (P2) is arranged on the back side (20b) of the substrate (20) such that it is arranged on said second edge (22e) and protrudes past the second edge (22e) away from the substrate and the first photosensitive element (P1).

14. The sensor device according to one of the preceding claims, **characterized in that** the photosensitive elements (P1, P2, P3) are configured to generate output signals (01, 02) which are indicative of the intensity of the light (L) impinging on the respective photosensitive surface (S1, S2, S3), wherein particularly the sensor device (1) comprises an analyzing circuit (70) that is configured to estimate said direction, particularly the azimuth and/or elevation angle (α, β) of the light source, using said output signals, wherein particularly the analyzing circuit (70) is configured to generate modified output signals (01', 02') from said output signals (01, 02) which modified output signals correspond to desired output signals.

15. The sensor device according to one of the preceding claims, **characterized in that** the sensor device (1) also comprises at least one temperature and/or humidity sensor (60) arranged on the substrate (20), particularly for detecting fogging on a surface to which the sensor device (1) is connected.
